# EUROPEAN PATENT APPLICATION

(11) **EP 4 179 931 A1**
(43) Date of publication of application: **17.05.2023**
(21) Application number: 21207560.0
(22) Date of filing: 10.11.2021
(51) Int. Cl.: A47J 43/046

(54) **A KITCHEN APPLIANCE**

(71) Applicant: Versuni Holding B.V., 5656 AE Eindhoven (NL)
(72) Inventor: HIETBRINK, Ingrid, 5656 AE Eindhoven (NL); FLOESSHOLZER, Hannes Uwe, 5656 AE Eindhoven (NL); VAUPOT, Jan, 5656 AE Eindhoven (NL)
(74) Representative: Vollering, Stefanus Franciscus Maria

(57) **Abstract**

A kitchen appliance comprises a base with first set of permanent magnets extending in a first plane and a container for mounting on the base with a rotary tool and a second set of permanent magnets extending in a second plane. A tilting arrangement is provided for tilting the first plane relative to the second plane thereby to reduce the magnetic coupling force between the base and the container. The tilting arrangement is an actuator which moves relative to the container housing to implement the tilting.

## Description

### FIELD OF THE INVENTION

This invention relates to kitchen appliances, and in particular kitchen appliances with a tool located in a food container, and the food container being removably attachable to a base.

### BACKGROUND OF THE INVENTION

Kitchen appliances are for example for food preparation or for food cooking. One example of food preparation kitchen appliance is a blender, with a separable base and container (which includes or is attached to a tool holder). This type of configuration is for example common for smoothie makers as well as blenders in general. Other kitchen appliances with a separable base and container may be arranged for chopping, kneading, centrifuging or ventilating.

One example of a food cooking kitchen appliance is an air fryer. An air fryer incorporates a fan for circulating heated air around a food container, which food container then comprises a cooking chamber. A tool in the form of a fan is then arranged in the food container for circulating the heated air. Thus, the tool in this case may be a fan or other airflow generator such as pump.

The term "tool" in this application is thus intended to cover a tool for processing food or fan or pump for controlling air flow, and the term "container" is intended to cover a container for food for processing and/or a container functioning as a cooking chamber.

To be able to handle and clean the food container, without the base of the device, the food container is removable from the base. The most common way of coupling the tool of the removable food container to the base of the device is by means of a mechanical coupling. This coupling for example has a drive part which projects from the base, which is driven by a motor in the base, and a receiving part in the bottom of the food container. The food container is for example attached to the base by a bayonet coupling.

Another means of coupling between the base and the tool holder is a magnetic drive coupling. In such a coupling, for example, the motor in the base may drive a ring of opposite polarity magnets, and a tool holder of the container has a corresponding ring of opposite polarity magnets which rotate by magnetic coupling between the two rings. The rings of magnets have the same even number of evenly distributed permanent magnets, forming pairs in both rings, with the polarities preferably alternating around the ring, and with magnets of opposite polarity facing each other between the rings. A coupling with the magnet poles mounted alternately around a ring is stronger than a coupling with the magnets mounted all in the same direction, because this prevents the driving part and the driven part from rotating relatively to each other. The magnetic parts do not touch, and a layer of non-magnetic material may be provided between the base and the container.

One advantage of a magnetic coupling is that the contact surfaces between the two parts can be substantially flat (with no rotary mechanical interlocking features as for example in a mechanical coupling) and this allows an aesthetically pleasing and easy-to-clean design. It also simplifies the mounting of the container to the base; it may simply be slid into place. It also has reduced sound level can cannot become overloaded. A magnetic coupling of this type is becoming increasingly popular.

In order to increase the strength of the magnetic coupling, and thereby enable a higher transfer of torque between the motor and the tool holder in the container, stronger magnets are desired. However, the use of stronger magnets makes it more difficult to remove the container from the base. Thus, it can become difficult for the user to remove the container for cleaning.

There is therefore a need for a design which allows the container to be removed more easily from the base while still enabling a strong magnetic coupling for transferring torque.

### SUMMARY OF THE INVENTION

The invention is defined by the claims.

According to examples in accordance with an aspect of the invention, there is provided a kitchen appliance comprising:
a base housing a motor, the base having an upper surface and a first portion of a magnetic drive coupling beneath the upper surface, wherein the first portion comprises a first set of permanent magnets extending in a first plane;
a container, comprising a housing with a bottom side which is for mounting on the base, wherein the container houses:
   a tool; and
   a second portion of the magnetic drive coupling for magnetically coupling with the first portion of the magnetic drive coupling such that the tool is driven by the motor of the base via the magnetic drive coupling, wherein the second portion comprises a second set of permanent magnets extending in a second plane; and
a tilting arrangement for tilting the first plane relative to the second plane thereby to reduce the magnetic coupling force between the first and second portions of the magnetic drive coupling, wherein the tilting arrangement comprises an actuator device additional to the container housing which is movable relative to the container housing to implement the tilting.

The upper surface is for example generally flat, although it may have shape features such as ribs or other protrusions to assist in positioning and alignment. However, these shape features do not rotate and thus do not form part of a rotary coupling.

This appliance is designed such that tilting between the sets of permanent magnets is used to provide a partial release of the coupling force between the two couplings, so that the container may be more easily removed from the base.

The tilting arrangement is a dedicated feature, in that it is an actuator that is movable relative to the container housing. In other words, the appliance has a feature which does not simply amount to tilting the container to release it from the base, but there is a dedicated tilting arrangement additional to the container itself.

The sets of magnets preferably comprise circular arrangements, and for example comprise magnets of alternating polarities.

In a first set of examples, the tilting arrangement for example comprises a lever for pulling up the container away from the base at one angular position around the bottom side of the container.

The lever thus implements a tilting of the container. The lever preferably provides a mechanical advantage to make the tilting easy to achieve.

A roller arrangement may be provided, wherein the roller arrangement is brought into operation when the tilting arrangement is operated.

In this way, once the container is tilted, the sliding away from the base is assisted by the roller arrangement, but the roller arrangement is retracted when the container is to be stationary on the base.

The roller arrangement for example lifts the bottom side of the container off the base when the tilting arrangement is operated. Thus, the tilting function implements the roller arrangement functionality.

In a second set of examples, the tilting arrangement is for tilting the first plane relative to the second plane with the base and container remaining in a same position.

Thus, the tilting is internal to the base or the container, and does not need any additional space for the external parts (the base or container) to be tilted. Thus, this enables a compact design.

In one example of the second set of examples, the tilting arrangement then for example comprises a lever for tilting the second portion of the magnetic drive coupling, and optionally also the tool, relative to the container. Thus, in this design, the second portion of the magnetic drive coupling and optionally the tool tilts within the container to release it from the magnetic coupling in the base.

The container for example has a handle, and the lever has an actuator portion located within a grip area of the container handle. This provides a simple to use arrangement.

In another example of the second set of examples, the tilting arrangement comprises a lever for tilting the first portion of the of the magnetic drive coupling relative to the base.

In this case, the container may be a standard container, and the tilting function is implemented in the base.

The lever may be actuated by a magnetic drive arrangement. Thus, the release may be driven rather than manually implemented by the user.

The magnetic drive arrangement is for example actuated automatically for a release time period when the kitchen appliance stops processing or is switched off. Thus, the container can be removed from the base after use, with no additional actions needed by the user.

The lever may instead be actuated by a manual actuator.

In all examples, the container may comprise a jar and a tool holder. The container for example fits to the base with no rotary mechanical interlocking.

The kitchen appliance for example comprises a blender and wherein and the tool comprises a blade or comprising a vessel and wherein the tool comprises a stirrer or an air fryer and wherein the tool comprises a fan blade.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows a kitchen appliance of the type to which the invention may be applied;
Figure 2 shows the magnetic coupling between the base and the tool holder;
Figure 3 shows a perspective view of the magnetic drive coupling;
Figure 4 shows a graph of magnetic coupling strength versus spacing distance;
Figures 5 and 6 show a first example of a tilting arrangement design in a docked and a released state, respectively;
Figures 7 and 8 show a second example of a tilting arrangement design in a docked and a released state, respectively;
Figures 9 and 10 show a third example of a tilting arrangement design in a docked and a released state, respectively;
Figures 11 and 12 show a fourth example of a tilting arrangement design in a docked and a released state, respectively;
Figures 13 and 14 show a fifth example of a tilting arrangement design in a docked and a released state, respectively; and
Figure 15 shows another kitchen appliance to which the invention may be applied.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a kitchen appliance comprising a base with first set of permanent magnets extending in a first plane and a container for mounting on the base with a tool and a second set of permanent magnets extending in a second plane. A tilting arrangement is provided for tilting the first plane relative to the second plane thereby to reduce the magnetic coupling force between the base and the container. The tilting arrangement is an actuator which moves relative to the container housing to implement the tilting.

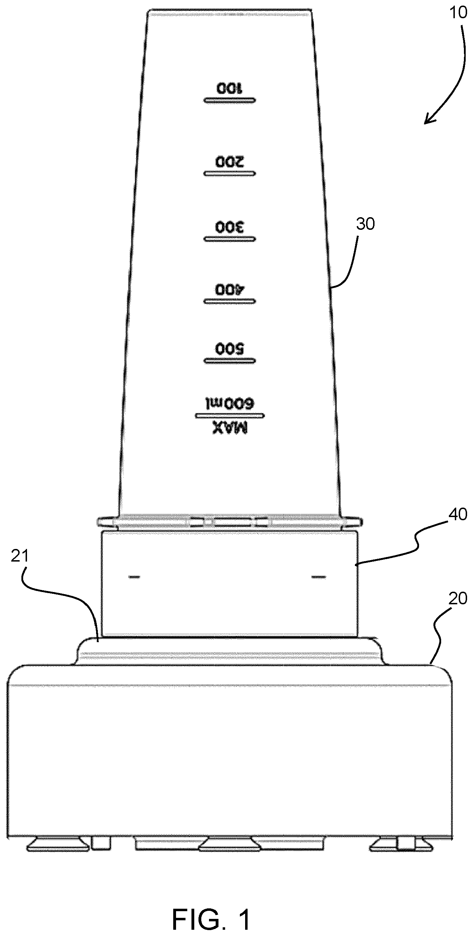

Figure 1 shows a kitchen appliance of the type to which the invention may be applied, in the form of food processing device. The kitchen appliance 10 comprises a base 20 housing a motor and a container 30. The container for example connects to a tool holder 40. The tool holder fits over a top opening of the container, for example by a screw fit. The tool holder houses a tool, typically a rotary tool such as a blending blade, although reciprocating tools may also be driven.

The container is filled with food items to be blended, and the tool holder is then fitted over the top. Thus, the tool holder functions as a lid of the container. The container is then inverted to mount it over the base, in the orientation shown in Figure 1. In an alternative design, a conventional container is used with a lid on top and the base is provided with a part of the coupling.

In traditional designs, there is a mechanical interlocking to fit the tool holder 40 to the base 20, such as a bayonet coupling. This coupling provides mechanical connection of the container set (and the attached tool holder) to the base as well as providing a rotary coupling.

This invention instead relates to a design in which the rotary coupling is implemented using a magnetic drive coupling. The magnetic drive coupling for example has a first portion in the base 20 and a second portion in the tool holder 40. The magnetic attraction between the two parts provides both a rotary coupling and a mechanical alignment. Thus, there is no need for interlocking mechanical parts.

The base 20 instead has a basically flat upper surface 21 over which the tool holder sits. The first portion of the magnetic drive coupling is beneath the flat upper surface 21 and the second portion is within the tool holder 40. The flat surface may have shape features for interfacing with the tool holder for guiding the tool holder to be positioned accurately so that the magnets are properly aligned. There may however also be surface features such as pins etc., where the container can be loaded, but these do not create a mechanical rotary coupling.

A bottom side of the tool holder 40 mounts over the base 20 but as mentioned above this may use magnetic attraction only. Thus, the tool holder fits to the base with no mechanical interlocking. There may be a lip or contoured surface to assist with the correct placement and alignment of the tool holder over the base, but the surfaces are basically flat for easy cleaning. Surface friction prevents the container from rotating.

Each drive coupling portion for example comprises a ring of magnets with alternating polarity. The north poles of the first portion of the magnetic drive coupling align with the south poles of the second portion of the magnetic drive coupling (and vice versa). In this way, torque can be transferred, but also the tool holder is releasably attached to the base by magnetic forces.

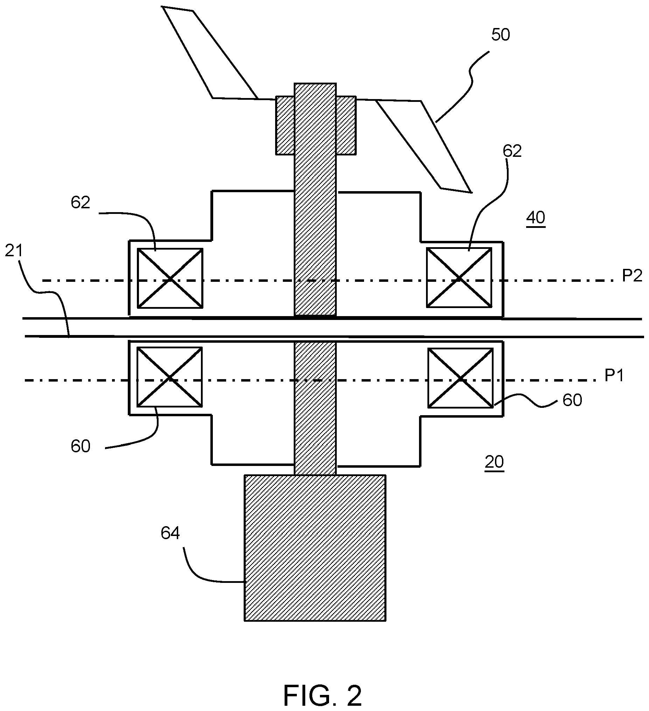

Figure 2 shows the magnetic coupling between the base 20 and the tool holder 40 at the bottom of the container. The base 20 supports the tool, typically a rotary tool 50, at the bottom of the container.

The base 20 houses a motor 64 which drives a first portion 60 of the magnetic drive coupling. This first portion 60 is beneath the upper surface 21 and comprises a first ring of permanent magnets extending in a first plane P1.

The container houses a second portion 62 of the magnetic drive coupling, for magnetically coupling with the first portion 60 of the magnetic drive coupling such that the rotary tool 50 is driven by the motor 64 of the base 20 via the magnetic drive coupling. The second portion 62 comprises a second ring of permanent magnets extending in a second plane P2.

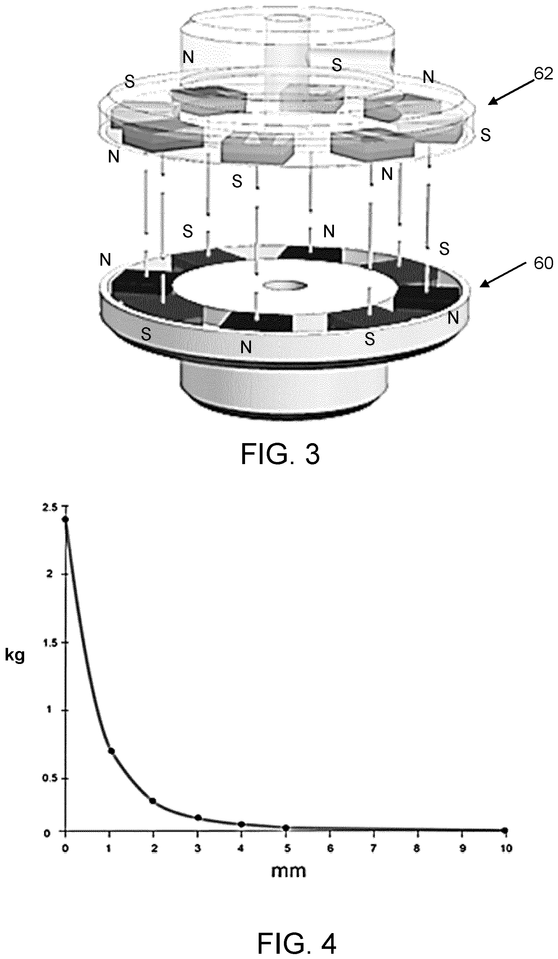

Figure 3 shows a perspective view of the magnetic drive coupling. It shows more clearly that each portion 60, 62 comprises a circular ring of magnets. Facing magnets have opposite polarity and therefore attract. As shown for the second portion 62, each ring of magnets comprises an alternating sequence of opposite polarity magnets. This enables the transfer of greater torque between the portions.

The optimal position for the transfer of torque from one portion of the magnetic drive coupling to the other is when the coupling parts are aligned, parallel and as close to each other as possible.

Increasing the distance between the coupling parts in an axial direction by moving the driving part decreases the strength of the magnetic attraction dramatically as shown by the graph of Figure 4, which shows the magnetic coupling force in kg (where 1kg force = 9.8N) versus spacing distance. As can be seen in the graph of Figure 4, a distance of 0.5mm can halve the magnetic attraction force.

Separating the coupling parts by tilting has a similar effect, in that the magnetic coupling force reduced at one angular orientation alone. The dramatic fall of coupling strength means it is sufficient to increase the separation only at a portion of the coupling, i.e., by tilting the planes P1 and P2 relative to each other.

This invention relates to various designs for providing tilting between the planes P1 and P2 by a mechanism that is easy to use for the user in order to remove the container from the base.

The user could simply tilt the whole container to reduce the coupling force. However, this is a cumbersome operation for the user. The invention instead provides a tilting arrangement for tilting the first plane P1 relative to the second plane P2 thereby to reduce the magnetic coupling force between the base and the container. The tilting arrangement comprises an actuator device additional to the container housing i.e., the separation is not made by applying a tilting force to the container itself. Instead, the actuator movable relative to the container housing to implement the tilting. The actuator may be an external lever or handle or it may be an internal part which is actuated by the appliance itself rather than manually by the user.

Tilting between the rings of permanent magnets is thereby used to provide a partial release of the coupling force between the two couplings, so that the container may be more easily removed from the base.

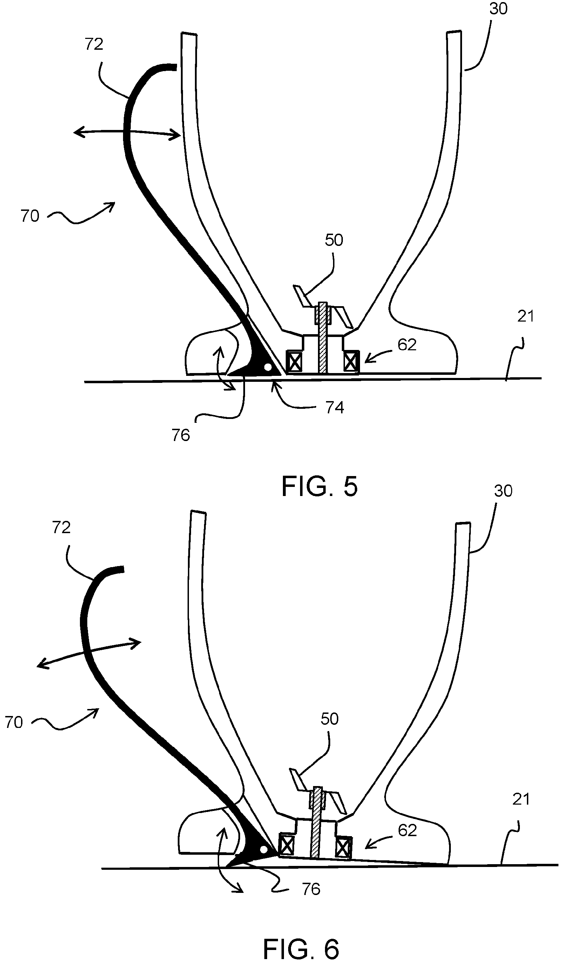

Figures 5 and 6 show a first example in which the tilting arrangement comprises a lever 70 for pulling up the container 30 away from the base 20 at one angular position around the bottom side of the container.

The lever has a handle 72 which extends up at a side of the container. It is pivotable relative to the main container body. It may function as the handle of the container, or there may be a separate container handle as well.

A pivot point 74 is at the bottom of the lever 70. The rotation of the lever drives a pushing portion 76 against the top surface 21 of the base. This pushing portion 76 thereby lifts the container at one angular orientation. By tilting the container for about one (or two) millimeters the magnetic coupling force is reduced dramatically.

The coupling force is thereby reduced and the container can be slid away from the base, using the lever as a handle or using a separate handle.

The lever handle 72 may be situated within a static handle or next to a static handle, as is shown for some other examples below. The lever preferably provides a mechanical advantage to make the tilting easy to achieve. This is achieved by having a short distance from the pivot point 74 to the pushing portion compared to the length of the handle 72. The mechanical advantage is for example more than 5 for example more than 10.

This mechanical advantage makes it easier for the user to overcome the coupling force of the magnetic coupling, because a reduced force needs to be applied by the user. This reduced force can be applied in a more controlled way. Thus, the risk of accidents and strain injury is reduced.

Figure 5 shows the container in the docked position on the base and Figure 6 shows the container in the separation position after actuation of the lever 70.

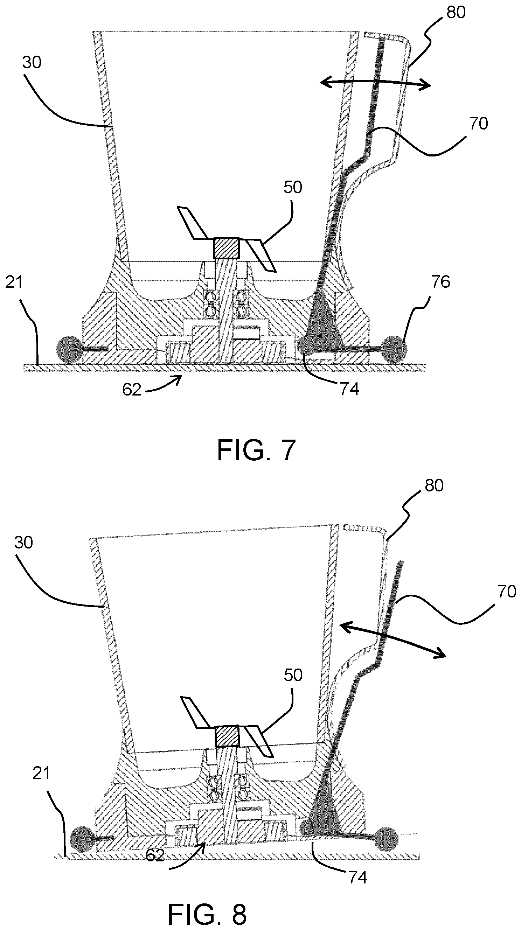

Figures 7 and 8 show a second example. There is again a lever 70 with a pivot point 74 near the bottom. In this example the lever 70 is alongside a separate static container handle.

The pushing portion 76 of the lever 70 in this example comprises a roller, which is part of a roller arrangement. The roller arrangement is thus brought into operation when the tilting arrangement is operated.

In this way, once the container is tilted, the sliding away from the base is assisted by the roller arrangement, but the roller arrangement is retracted when the container is to be stationary on the base.

The roller arrangement may comprise an annular ring of rollers all around the base or it may comprise a set of rollers, for example a pair of rollers at diametrically opposite locations, or a set of three or more rollers. Only one roller, or only one portion of the annular ring, needs to be actuated to provide the desired tilting.

In the non-tilted orientation, the rollers may contact the base as well as the container, or the rollers may be spaced from the base. In the tilted orientation, the bottom of the container may be lifted clear of the base so that the container is supported on the base only by the roller arrangement. This provides a low friction arrangement allowing the container to slid off the base without lifting.

Figure 7 shows the container in the docked position on the base and Figure 8 shows the container in the separation position after actuation of the lever 70.

In the examples above, the tilting is achieved by tilting the whole container relative to the base, but using a separate actuator lever, which itself pivots relative to the main housing of the container.

In a second set of examples, the tilting arrangement is for tilting the first plane relative to the second plane with the base and container remaining in a same position. In other words, the outer housings of the container and the base remain static, and the movements are internal. This avoids the need for any additional space for the external parts to be tilted. Thus, this enables a compact design.

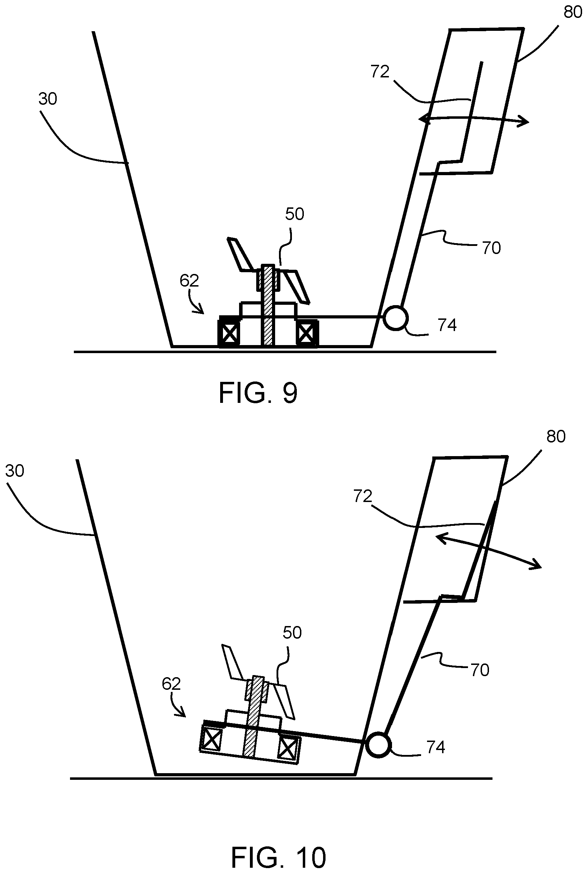

Figures 9 and 10 show a first example. There is again a lever 70 with a pivot point 74 near the bottom. In this example the handle 72 of the lever 70 is internally within the grip area cavity of a separate static container handle 80.

The tilting arrangement is for tilting the second portion 62 of the magnetic drive coupling and the rotary tool 50 relative to the main container housing container. Thus, in this design, the rotary tool tilts within the container to release it from the magnetic coupling in the base.

Figure 9 shows the container in the docked position on the base and Figure 10 shows the container with the second portion 62 of the magnetic drive coupling 62 in the separation position after actuation of the lever.

The examples above are based on tilting the second plane P2 of the second portion 62 of the magnetic drive coupling in the container. Instead, the tilting may be of the first plane P1 of the first portion 60 of the magnetic drive coupling in the base. Thus, the tilting arrangement may comprise a lever for tilting the second portion of the of the magnetic drive coupling relative to the base. In this case, the container may be standard, and the tilting function is implemented in the base.

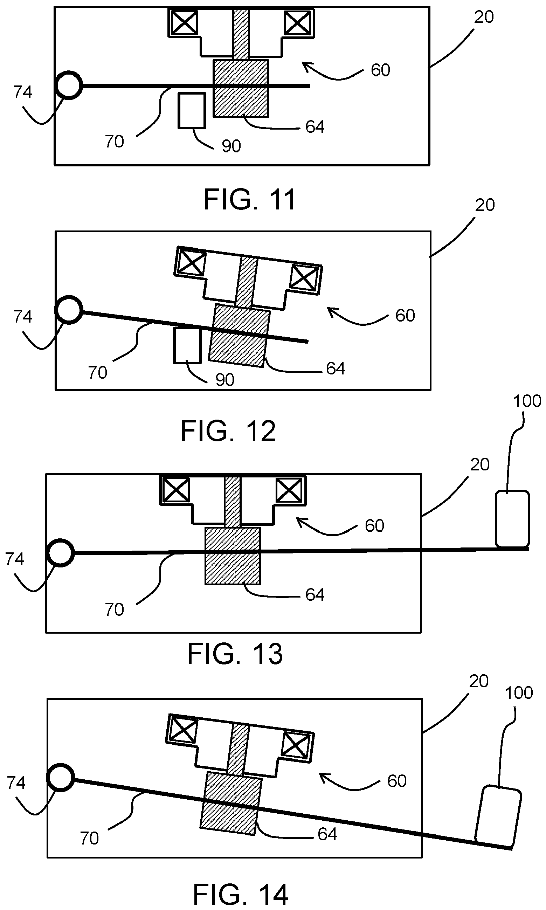

Figures 11 and 12 show a first example. The lever 70 has a pivot point 74 internally within the base 20. The pivoting of the lever changes the angle of the first plane P1 (shown in Figure 2).

In the example of Figures 10 and 11, the lever 70 is actuated by a magnetic drive arrangement 90. Of course, any suitable drive actuator may be used. The release of the container is then driven rather than manually implemented by the user.

The magnetic drive actuator for example comprises a lifting electromagnet which in this example pulls and tilts the motor and the first portion of the magnetic drive arrangement downwardly. It may instead only move the first portion of the magnetic drive arrangement. This tilting function may be initiated when the device is turned off, or when the user pushes a button to activate the magnet. The magnetic drive arrangement for example maintains the tilt for a time period, such as a few seconds, during which the user can take the container off the base. If the magnet is activated when the device is turned off, an amount of residual stored power will be dissipated after which the magnet will become inactive.

If there is no container, the magnet may then rest in the tilted orientation until a container is attached, which will then pull up the first portion of the magnetic drive coupling into the normal operating position.

The magnetic drive actuator may be controllable to drive the lever in both directions, so that turning the device on (or the user pushing a button) may be used to drive the first portion of the magnetic drive coupling into the active position instead of relying on the presence of a container.

Figure 11 shows the base 20 in a configuration in which the container can be docked position on the base and Figure 12 shows the base 20 in a configuration with the first portion 60 of the magnetic drive coupling 60 in a separation position after actuation of the lever 70 by the magnetic drive arrangement.

Figures 13 and 14 show a second example. The lever 70 again has a pivot point 74 internally within the base 20 and also an external handle 100 i.e., a manual actuator for manual actuation by the user.

The examples above show a container with a separate tool holder. However, the invention may equally be applied to a container with a fixed bottom at which the tool is mounted.

When the lever is to tilt the container, the container may have shape features to assist in this tilting, such as a curved corner about which the container rocks or a static cradle in which the container can rock. The base may also have such shape features. The same shape features used to assist tilting may be used to provide alignment of the magnetic poles so that a better torque transfer takes place.

The examples above relate to a food processing kitchen appliance, wherein the tool is typically used to process food before cooking and the container is a vessel for food processing. The food processing may also take place during cooking when the appliance is also for cooking e.g. for stirring during the cooking process. In such a case, the container may be a vessel for both food processing and cooking.

The invention as described through the various examples may also be applied to an appliance only for food cooking, and the tool is for example for controlling the cooking environment rather than processing the food. The container is then a cooking chamber and the tool is for example for controlling an air flow.

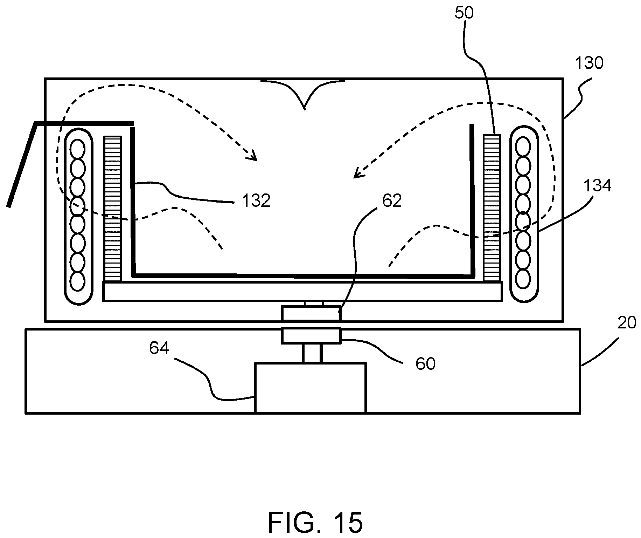

Figure 15 shows an example of an air fryer, having a base 20 housing a motor 64 and a container in the form of a food cooking chamber 130 in which there is a tool 50 in the form of a fan blade for circulating heated air around the cooking chamber. The first and second portions 60,62 of the magnetic drive coupling are shown.

The base 20 houses the motor 64 which drives the first portion 60 of the magnetic drive coupling. The container houses the second portion 62 of the magnetic drive coupling, for magnetically coupling with the first portion 60 of the magnetic drive coupling such that the tool 50 is driven by the motor 64 of the base 20 via the magnetic drive coupling.

The food is held in a basket 132, and the fan blade circulates air around the food and through the basket, which has at least perforated side walls. A handle is attached either to the container/ food cooking chamber 130 or to the basket 132 so that the container can be removed from the base by the user.

In one example, the cooking chamber has a heater 134, and the coupling between the base 20 and the cooking chamber 130 also provides an electrical power coupling to the heater 134. This electrical power coupling is for example wireless by inductive power transfer.

The magnetic coupling between the base and the container in this case enables driving of the fan blade. It means the container part (the cooking chamber) of the air fryer does not need to be separately plugged in, and the motor for driving the fan is in the base 20.

In another example of air fryer, the heater is in the base 20. In this case, heat may be transferred to the cooking chamber by inductive heating. In this case, no electrical power transfer is needed between the base and the container.

The base 20 may for example be one hob of the cooking surface of a cooker, so that different appliances may be applied to the hob. For example, the same design of base 20 and its magnetic coupling 60 may be used to drive a food processing appliance such as a blender or a food cooking device such as an air fryer. A cooking appliance wireless power transfer is for example disclosed in WO 2018/024913.

The invention may thus be applied to any kitchen appliance having a rotary tool driven by a magnetic coupling from a motor in a separate base. The tool may be for beating, whisking, blending, stirring, mixing, airflow control etc.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A kitchen appliance (10) comprising:
a base (20) housing a motor (64), the base having an upper surface (21) and a first portion (60) of a magnetic drive coupling beneath the upper surface, wherein the first portion comprises a first set of permanent magnets extending in a first plane (P1);
a container (30), comprising a housing with a bottom side which is for mounting on the base (20), wherein the container houses:
a tool (50); and
a second portion (62) of the magnetic drive coupling for magnetically coupling with the first portion (60) of the magnetic drive coupling such that the tool (50) is driven by the motor (64) of the base via the magnetic drive coupling, wherein the second portion comprises a second set of permanent magnets extending in a second plane (P2); and
a tilting arrangement (70,72,74) for tilting the first plane (P1) relative to the second plane (P2) thereby to reduce the magnetic coupling force between the first and second portions of the magnetic drive coupling, wherein the tilting arrangement comprises an actuator device (70,72,90,100) additional to the container housing which is movable relative to the container housing to implement the tilting.

2. The kitchen appliance of claim 1, wherein the tilting arrangement comprises a lever (70) for pulling up the container (30) away from the base (20) at one angular position around the bottom side of the container.

3. The kitchen appliance of claim 2, wherein the lever (70) provides a mechanical advantage.

4. The kitchen appliance of claim 2 or 3, further comprising a roller arrangement (76), wherein the roller arrangement is brought into operation when the tilting arrangement is operated.

5. The kitchen appliance of claim 4, wherein the roller arrangement (76) lifts the bottom side of the container off the base when the tilting arrangement is operated.

6. The kitchen appliance of claim 1, wherein the tilting arrangement is for tilting the first plane (P1) relative to the second plane (P2) with the base and container remaining in a same position.

7. The kitchen appliance of claim 6, wherein the tilting arrangement comprises a lever (70) for tilting the second portion (62) of the magnetic drive coupling relative to the container (30).

8. The kitchen appliance of claim 7, wherein the container has a handle (80), and the lever has an actuator portion (72) located within a grip area of the container handle (80).

9. The kitchen appliance of claim 6, wherein the tilting arrangement comprises a lever (70) for tilting the first portion (60) of the of the magnetic drive coupling relative to the remainder of the base (20).

10. The kitchen appliance of claim 9, wherein the lever (70) is actuated by a magnetic drive arrangement (90).

11. The kitchen appliance of claim 10, wherein the magnetic drive arrangement (90) is actuated automatically for a release time period when the kitchen appliance stops processing or is switched off.

12. The kitchen appliance of claim 9, wherein the lever (70) is actuated by a manual actuator (100).

13. The kitchen appliance of any one of claims 1 to 12, further comprising a tool holder (40) connected to the container.

14. The kitchen appliance of any one of claims 1 to 13, wherein the container (40) fits to the base (20) with no rotary mechanical interlocking.

15. The kitchen appliance of any one of claims 1 to 14, comprising a blender and wherein the tool comprises a rotary blade, or comprising a vessel and wherein the tool comprises a stirrer, or comprising an air fryer and wherein the tool comprises a fan blade.
